# EUROPEAN PATENT APPLICATION

(11) **EP 3 745 665 A1**
(43) Date of publication of application: **02.12.2020**
(21) Application number: 18902182.7
(22) Date of filing: 16.11.2018
(51) Int. Cl.: H04L 29/06

(54) **MEDIA CONTROL METHOD AND APPARATUS FOR FUSION DEVICE, AND CONTROLLER, MOBILE TERMINAL AND STORAGE MEDIUM**

(30) Priority: 25.01.2018 CN 201810073483
(71) Applicant: ZTE Corporation, shenzhen Guangdong 518057 (CN)
(72) Inventor: GAO, Yang, Shenzhen, Guangdong 518057 (CN); ZHANG, Lu, Shenzhen, Guangdong 518057 (CN); YANG, Qiang, Shenzhen, Guangdong 518057 (CN)
(74) Representative: Tiburzi, Andrea
(86) International application number: PCT/CN2018/116038
(87) International publication number: WO 2019/144682

(57) **Abstract**

The present invention discloses a media control method and apparatus for a fusion device, a controller, a terminal and a storage medium. The method includes the following steps: the controller sends a communication connection quality alarm notification to a terminal when the controller detects, in a process of transferring a media stream between the fusion device and a remote device, that a quality parameter of a communication connection for a media stream transmission is not matched with a preset quality parameter threshold; and the terminal acquires new target media description information according to the notification, and sends a media switching request including the new target media description information to the controller to establish a target media plane with the remote device for a media stream interaction.

## Description

### TECHNICAL FIELD

The present invention relates to, but is not limited to, the field of communications, and in particular, to a media control method and apparatus for a fusion device, a controller, a mobile terminal and a storage medium.

### BACKGROUND

A multimedia communication has always been a pursued goal in the field of communications, and has been constantly improved. In the context of a 4th generation mobile communication technology (4G), technologies such as a voice over long term evolution (LTE) (VoLTE) based on an LTE network, or a rich communication suit (RCS) present a window of an opportunity for mobile users to popularly use the multimedia communication.

A user equipment (UE) in the related art, such as a mobile phone, in particular a smart phone, has been popularized with the capabilities of a front-facing camera and a video stream, i.e., a video call has been achieved on the UE. However, a large screen and a high-definition multimedia communication may not be experienced due to limitations of hardware devices of the UE and limitations of multimedia capabilities. Moreover, from the perspective of the future, the capability of the multimedia communication, such as a communication that supports a holographic projection, may not be built or born by the simple UE. In order to solve this problem, a fusion communication technology has emerged, a device with multimedia functions such as a large screen, a high definition and even a holographic projection is used as a fusion device to be introduced into an internet protocol (IP) multimedia subsystem (IMS) through the UE. A media stream interaction with a remote UE is achieved through the multimedia functions of the fusion device, thus a better multimedia communication experience is achieved.

However, in an actual use of the fusion communication technology, when the poor quality of the communication connection network for transmitting a media stream affects the transmission of the media stream, the multimedia communication is affected to a great extent, and the satisfaction of the user for the experience is reduced.

### SUMMARY

In view of this, embodiments of the present invention expect to provide a media control method and apparatus for a fusion device, a controller, a terminal and a storage medium, which can reduce the effect on a media stream transmission and ensure the normal proceeding of multimedia communication when the quality of a communication connection network for transmitting the media stream is poor.

An embodiment of the present invention provides a media control method for a fusion device. The method includes the following steps: when a controller detects, in a process of transferring a media stream between the fusion device and a remote device, that a quality parameter of a communication connection for a media stream transmission is not matched with a preset quality parameter threshold, the controller sends a communication connection quality alarm notification to a terminal; and the controller receives a media switching request sent by the terminal according to the communication connection quality alarm notification, and forwards the media switching request to a registration server to establish a target media plane with the remote device for a media stream interaction, where the media switching request includes target media description information acquired by the terminal according to the communication connection quality alarm notification.

An embodiment of the present invention further provides a media control method for a fusion device. The media control method for the fusion device includes the following steps: a terminal receives a communication connection quality alarm notification sent by a controller, where the communication connection quality alarm notification is generated when the controller detects, in a process of transferring a media stream between the fusion device and a remote device, that a quality parameter of a communication connection for a media stream transmission is not matched with a preset quality parameter threshold; the terminal acquires target media description information according to the communication connection quality alarm notification; and the terminal sends a media switching request including the target media description information to the controller to initiate an establishment of a target media plane with the remote device for a media stream interaction.

An embodiment of the present invention further provides a media control apparatus for a fusion device. The media control apparatus includes a monitoring module and a processing module.

The monitoring module is configured to send a communication connection quality alarm notification to a terminal when detecting, in a process of a media stream between the fusion device and a remote device, that a quality parameter of a communication connection for a media stream transmission is not matched with a preset quality parameter threshold.

The processing module is configured to receive a media switching request sent by the terminal according to the communication connection quality alarm notification, and forward the media switching request to a registration server to establish a target media plane with the remote device for a media stream interaction, where the media switching request includes target media description information acquired by the terminal according to the communication connection quality alarm notification.

The reception module is configured to receive a communication connection quality alarm notification sent by a controller, where the communication connection quality alarm notification is generated when the controller detects, in a process of transferring a media stream between the fusion device and a remote device, that a quality parameter of a communication connection for a media stream transmission is not matched with a preset quality parameter threshold.

The media switching control module is configured to acquire target media description information according to the communication connection quality alarm notification, and send a media switching request including the target media description information to the controller to initiate an establishment of a target media plane with the remote device for a media stream interaction.

An embodiment of the present invention further provides a controller. The controller includes a first processor, a first memory and a first communication bus. The first communication bus is configured to implement a connection communication between the first processor and the first memory. The first processor is configured to execute one or more first programs stored in the first memory to implement the steps of the media control method for the fusion device described above.

An embodiment of the present invention further provides a terminal. The terminal includes a second processor, a second memory and a second communication bus. The second communication bus is configured to implement a connection communication between the second processor and the second memory. The second processor is configured to execute one or more second programs stored in the second memory to implement the steps of the media control method for the fusion device described above.

An embodiment of the present invention further provides a computer storage medium. The computer readable storage medium stores one or more first programs, which are executed by one or more processors to implement the steps of the media control method for the fusion device described above; or, the computer readable storage medium stores one or more second programs, which are executed by one or more processors to implement the steps of the media control method for the fusion device described above.

The beneficial effects of applying the embodiments of the present invention are as follows.

According to the media control method and apparatus for the fusion device, the controller, the terminal and the storage medium provided by the embodiments of the present invention, the controller may send the communication connection quality alarm notification used for indicating the poor communication connection quality to the terminal when the controller detects, in the process of transferring the media stream between the fusion device and the remote device, that the quality parameter of the communication connection for the media stream transmission is not matched with the preset quality parameter threshold (namely, the communication connection quality of the media stream transmission is poor); and the terminal may acquire the target media description information according to the communication connection quality alarm notification, and send the media switching request including the target media description information to the controller so as to initiate the establishment of the target media plane (namely, a new media plane that is different from a media plane currently performing the media transmission) with the remote device for the media stream interaction, thereby implementing the media stream transmission through the newly established target media plane. Therefore, when the quality of a communication connection network for the media stream transmission is poor, it is possible to ensure that the multimedia communication is provided for the user normally, the compatibility of the fusion device with various media capabilities in various network coverage scenarios is improved after the fusion device accesses to the IMS, and meanwhile the user satisfaction with the multimedia communication experience is improved to a great extent.

### BRIEF DESCRIPTION OF DRAWINGS

FIG. 1 is a flowchart of a media control method for a fusion device on a controller side according to an embodiment of the present invention;
FIG. 2 is a flowchart of a media control method for a fusion device on a terminal side according to an embodiment of the present invention;
FIG. 3 is a structural diagram of a media control apparatus for a fusion device on a controller side according to an embodiment of the present invention;
FIG. 4 is a structural diagram of a controller according to an embodiment of the present invention;
FIG. 5 is a structural diagram of a media control apparatus for a fusion device on a terminal side according to an embodiment of the present invention;
FIG. 6 is a structural diagram of a terminal according to an embodiment of the present invention;
FIG. 7 is a flowchart illustrating an establishment of a fusion device call between a UE and a remote UE according to an embodiment of the present invention;
FIG. 8 is a flowchart illustrating a media switching by adopting a media stream code rate reduction manner when a remote communication quality is poor according to an embodiment of the present invention;
FIG. 9 is a flowchart illustrating a media switching by adopting a media stream code rate reduction manner when an access-side communication quality is poor according to an embodiment of the present invention; and
FIG. 10 is a flowchart illustrating a media switching by adopting a media stream fallback manner when an access-side communication quality is poor according to an embodiment of the present invention.

### DETAILED DESCRIPTION

In order to make objectives, technical schemes, and advantages of the present invention clearer, embodiments of the present invention will be further described in detail below through specific implementations in conjunction with the drawings. It should be understood that the specific embodiments described herein are merely used for illustrating the present invention, and are not intended to limit the present invention.

In a fusion communication technology, if a fusion device used has a remote (far-end) communication capability, the fusion device may directly establish a media plane with a remote device through a controller (namely, a session controller), and a media stream between the fusion device and the remote device may be directly transferred through the controller instead of through a terminal (namely, a communication terminal) on the fusion device side. In this case, since the remote device utilizes its own remote communication capability, an access-side network between the remote device and the controller and an access-side network between the terminal and the controller are relatively independent and may be different. In this case, in order to implement that the normal proceeding of the multimedia communication is ensured by reducing the effect on the media stream transmission when the quality of a communication connection network for transmitting the media stream in the fusion communication technology is poor, this embodiment provides a media control method for a fusion device. A controller may detect the quality of a communication connection for a media stream transmission in a process of transferring a media stream between the fusion device and the remote device. Specifically, the controller may detect a quality parameter of the communication connection for the media stream transmission. When the controller detects that the quality parameter is not matched with a preset quality parameter threshold value, it indicates that a current communication connection quality is poor, and the controller may send a communication connection quality alarm notification used for indicating the poor communication connection quality to a terminal on the fusion device side. The terminal may acquire target media description information according to the communication connection quality alarm notification, and send a media switching request including the target media description information to the controller so as to initiate an establishment of a target media plane (namely, a new media plane that is different from a media plane currently performing the media transmission) with the remote device for a media stream interaction, thereby implementing the media stream transmission through the newly established target media plane. Therefore, when the quality of the communication connection network for the media stream transmission is poor, it is possible to ensued that the multimedia communication is provided for the user normally, the compatibility of the fusion device with various media capabilities in various network coverage scenarios is improved after the fusion device accesses to an IMS, and meanwhile the user satisfaction with the multimedia communication experience is improved to a great extent.

For ease of understanding, further description is set forth in this embodiment by taking a media control method for a fusion device on a controller side and a terminal side as examples respectively.

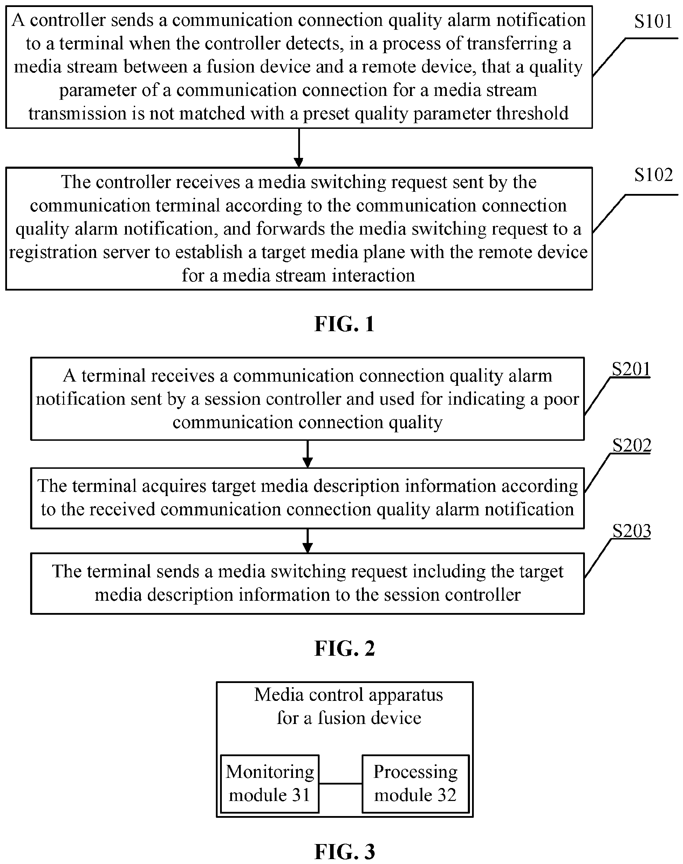

As shown in FIG. 1, on the controller side, the media control method for the fusion device includes steps described below.

In S101, a controller sends a communication connection quality alarm notification used for indicating a poor communication connection quality to a terminal when the controller detects, in a process of transferring a media stream between the fusion device and a remote device, that a quality parameter of a communication connection for a media stream transmission is not matched with a preset quality parameter threshold (i.e., it indicates that the quality of the communication connection for the media stream transmission is poor).

The remote device in this embodiment may be a remote terminal or a remote media server, such as a video server. The terminal in this embodiment includes, but is not limited to, various terminal-type user devices with communication capabilities. For example the various terminal-type user devices includes, but are not limited to, a smartphone, a Pad-type tablet computer, a laptop, a smart wearable device (a smart watch, a smart bracelet, etc.), or other user smart device.

In this embodiment, the fusion device includes, but is not limited to, a device with the multimedia capability and the remote communication capability (which of course may also has short-range communication capability, where the short-range communication in this embodiment includes, but is not limited to, a bluetooth, infrared, WiFi, near field communication (NFC)).

In this embodiment, the fusion device may be introduced into an IP multimedia subsystem (IMS) through the terminal, and establish a media plane with the remote device through the controller. The fusion device may acquire a voice and/or video media stream by utilizing a multimedia function and transmit the acquired voice and/or video media stream to the remote device through the controller. The fusion device may also receive a voice and/or video media stream from the remote device through the controller, and utilize the multimedia function to display the acquired voice and/or video media stream to a user. It should be understood that the media stream in this embodiment includes, but is not limited to, a voice media stream and a video media stream. The controller in this embodiment includes, but is not limited to, a session border controller (SBC).

In this embodiment, the fusion device may be connected to the terminal through the short-range communication, or may be connected to the terminal through the remote communication capability of the fusion device.

In this embodiment, the quality parameter of the communication connection may be at least one quality parameter used for characterizing the communication connection. For example, the quality parameter of the communication connection includes, but not limited to, at least one of: a signal power, a bit error rate, a packet loss rate, a transmission time delay, or a signal strength, where a corresponding preset quality parameter threshold includes at least one of a signal power threshold, a bit error rate threshold, or a packet loss rate threshold. When the detected signal power is less than the preset signal power threshold, it indicates that the signal power is not matched with the signal power threshold; when the detected bit error rate is greater than the preset bit error rate threshold, it indicates that the bit error rate is not matched with the bit error rate threshold; and when the detected packet loss rate is greater than the preset packet loss rate threshold, it indicates that the packet loss rate is not matched with the packet loss rate threshold. Of course, it should be understood that a determination may also be performed in combination with at least two quality parameters, which will not be described here.

In this embodiment, a specific media switching manner may be determined according to the detection result of the quality of the communication connection for the media stream transmission, so that the media description information of the terminal is determined to be acquired and the media stream is completely fallen back on the terminal, or target media description information of the fusion device is acquired to implement the media stream code rate reduction and so on.

In S102, the controller receives a media switching request sent by the terminal according to the communication connection quality alarm notification, and forwards the media switching request to a registration server to establish a target media plane with the remote device for a media stream interaction.

It should be understood that the target media plane established in this step includes one or more media streams.

The media switching request received in this step includes the target media description information acquired by the terminal according to the communication connection quality alarm notification. As described above, the target media description information may be media description information of the terminal, or may be new media description information of the fusion device corresponding to a low media stream code rate.

In this embodiment, when the controller performs a quality detection of the communication for the media stream transmission, the controller may detect the corresponding media stream according to an indication of the terminal so as to determine the communication quality. For example, before the controller transfers the media stream between the fusion device and the remote device, the method may further includes the following step: a media stream detection instruction sent by the terminal and used for indicating the media stream to be detected is received. This process may be performed in a process of establishing the multimedia communication of the fusion device. For example, the media stream detection instruction may be carried in an INVITE request sent by the terminal to the controller, and the media stream detection instruction includes which media streams need to be detected, which may be all media streams or specific partial media streams, such as a media stream with a large bandwidth, or a specific type of media stream (such as an audio media stream). Then the controller may detect, in the process of transferring the media stream between the fusion device and the remote device, the media stream to be detected according to the media stream detection instruction.

As shown in FIG. 2, on the terminal side, a media control method for a fusion device includes steps described below.

In S201, the terminal receives a communication connection quality alarm notification sent by the controller and used for indicating a poor communication connection quality.

As described above, the communication connection quality alarm notification is generated when the controller detects, in a process of transferring a media stream between the fusion device and the remote device, that the quality of the communication connection for the media stream transmission is poor.

In S202, the terminal acquires target media description information according to the received communication connection quality alarm notification.

In S203, the terminal sends a media switching request including the target media description information to the controller so as to initiate an establishment of a target media plane with the remote device for a media stream interaction.

In this embodiment, the terminal may determine a specific media switching manner according to a specific detection result of the quality of the communication connection for the media stream transmission in the communication connection quality alarm notification, thereby determining to acquire the media description information of the terminal and enable all media streams to fall back onto the terminal, or acquire the target media description information of the fusion device so as to achieve the media stream code rate reduction and the like.

For example, in one example, the terminal acquires first media description information (a session description protocol (SDP) structure may be adopted, of course, other structures may be adopted) of the fusion device when the communication connection quality alarm notification indicates that the quality of a communication connection for the media stream transmission between the fusion device and the controller is poor (i.e., the communication connection quality alarm notification is generated when the controller detects that a quality parameter of a communication connection for a media stream transmission between the controller itself and the fusion device is not matched with a preset quality parameter). The first media description information includes information used for characterizing a first new media stream code rate, and the first new media stream code rate is less than a code rate used by a media stream currently transmitted by the fusion device. At this time, the terminal sends a media switching request including the first media description information to the controller to achieve the establishment of a target media plane between the fusion device and the remote device. The code rate of the media stream of the new target media plane is lower than the previous media stream code rate.

In one example, the terminal acquires second media description information of the terminal itself when the communication connection quality alarm notification indicates that the quality of the communication connection for the media stream transmission between the fusion device and the controller is poor (i.e., the communication connection quality alarm notification is generated when the controller detects that the quality parameter of the communication connection for the media stream transmission between the controller itself and the fusion device is not matched with the preset quality parameter) and when the terminal determines that a media capability of the terminal itself supports a media stream fallback on the fusion device. At this time, the terminal sends a media switching request including the second media description information to the controller so as to achieve the establishment of a new media plane between the terminal and the remote device, and the terminal enables the media stream falls back on the terminal.

In one example, the terminal acquires third media description information of the fusion device when the communication connection quality alarm notification indicates that the quality of the communication connection for the media stream transmission between the remote device and the controller is poor (i.e., the communication connection quality alarm notification is generated when the controller detects that the quality parameter of the communication connection for the media stream transmission between the controller itself and the remote device is not matched with the preset quality parameter threshold). The third media description information includes information for characterizing a second new media stream code rate, and the second new media stream code rate at this time is also less than a code rate used by a media stream currently transmitted by the fusion device. At this time, the terminal sends a media switching request including the third media description information to the controller so as to achieve the establishment of a new target media plane between the fusion device and the remote device, and the code rate of the media stream of the new target media plane is also lower than the previous media stream code rate, thereby ensuring the normal proceeding of the media stream communication.

As described above, in this embodiment, when the controller detects that the quality of the communication connection for the media stream transmission is poor, it may be that the quality of the communication connection for the media stream transmission between the fusion device and the controller is poor (which may be referred to, in this embodiment, that the communication quality of an access-side network is poor), or it may be that the quality of the communication connection for the media stream transmission between the controller and the remote communication is poor (which may be referred to, in this embodiment, that the remote communication quality is poor).

As analyzed above, in this embodiment, when the controller detects that the communication quality of the access-side network is poor, the terminal may perform the media switching by adopting any one of a media stream full fallback manner and a media stream code rate reduction manner so as to ensure the normal proceeding of the media stream communication. When the controller detects that the remote communication quality is poor, the terminal may perform the media switching by adopting the media stream code rate reduction manner so as to ensure the normal proceeding of the media stream communication.

The media switching request sent by the terminal in this embodiment includes, but is not limited to, any one of a media modification request, a Re-INVITE request, or an UPDATE data request. A specific manner of establishing the media plane may be any manner of establishing the media plane, which will not be described here.

It should be understood that one or more of the above three manners may be flexibly selected to be combined according to specific conditions. For example, it may be determined whether a full fallback transmission or a media stream code rate reduction transmission is adopted according to the media capability of the terminal itself and the specific communication connection quality and the like.

It should be understood that the media description information in this embodiment may further include, but is not limited to, at least one of a microphone parameter, a speaker parameter, a camera parameter, or a screen parameter according to specific application scenarios.

According to the media control method for the fusion device provided in this embodiment, it is possible to ensure the experience of the multimedia communication (for example, including, but being not limited to, various multimedia calls and live broadcasts) which is continuously provided for a user through the above timely media switching when the network quality is poor in a process that the fusion device accesses the IMS to perform the media stream communication with the remote device. Meanwhile, the compatibility of the media device with a large bandwidth serving as the fusion device to access to the IMS in various network coverage scenarios may be improved, so that the user experience with the multimedia communication may be further improved.

In order to solve a problem of how to ensure the normal proceeding of the multimedia communication by reducing the effect on the media stream transmission when the quality of the communication connection network used for transmitting a media stream in the fusion communication technology is poor, this embodiment provides a media control apparatus for a fusion device. The media control apparatus for the fusion device may be disposed in the above controller. As shown in FIG. 3, the media control apparatus for the fusion device includes a monitoring module 31 and a processing module 32.

The monitoring module 31 is configured to send a communication connection quality alarm notification indicating a poor communication connection quality to a terminal when detecting, in a process of transferring a media stream between the fusion device and a remote device, that the quality of a communication connection for a media stream transmission is poor (i.e., a quality parameter of the communication connection for the media stream transmission is not matched with a preset quality parameter threshold) . The specific detection process may refer to the above embodiments, which will not be repeated here.

The processing module 32 is configured to receive a media switching request sent by the terminal according to the communication connection quality alarm notification, and forward the media switching request to a registration server to establish a target media plane with the remote device for a media stream interaction. The media switching request includes target media description information acquired by the terminal according to the communication connection quality alarm notification. The specific process may refer to the above embodiments, which will not be repeated here.

In this embodiment, when the monitoring module 31 performs the quality detection of the communication for the media stream transmission, the monitoring module 31 may detect the corresponding media stream according to an indication of the terminal so as to determine the communication quality. For example, before the controller transfers the media stream between the fusion device and the remote device, the monitoring module 31 may further receive a media stream detection instruction sent by the terminal and used for indicating the media stream to be detected, and this process may be performed in a process of establishing the multimedia communication of the fusion device. For example, the media stream detection instruction may be carried in an INVITE request sent by the terminal to the controller, and the media stream detection instruction includes which media streams need to be detected, which may be all media streams or specific partial media streams, such as a media stream with a large bandwidth, or a specific type of media stream (such as an audio media stream). Then the monitoring module 31 may detect, in the process that the controller transfers the media stream between the fusion device and the remote device, the media stream to be detected according to the media stream detection instruction.

It should be understood that the above functions of the monitoring module 31 and the processing module 32 in this embodiment may be implemented by a processor in the controller.

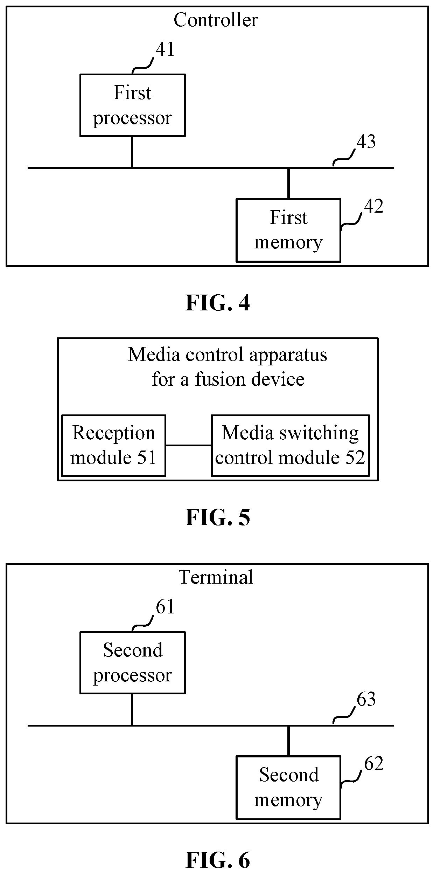

In order to solve the above problems, this embodiment further provides a controller. As shown in FIG. 4, the controller includes a first processor 41, a first memory 42 and a first communication bus 43. The first communication bus 43 is configured to implement a connection communication between the first processor 41 and the first memory 42. The first processor 41 is configured to execute one or more first programs stored in the first memory 42 to implement the steps of the media control method for the fusion device provided by the embodiments of the present invention.

This embodiment provides a media control apparatus for a fusion device. The media control apparatus for the fusion device is applicable to a terminal. As shown in FIG. 5, the media control apparatus for the fusion device includes a reception module 51 and a media switching control module 52.

The reception module 51 is configured to receive a communication connection quality alarm notification sent by a controller and used for indicating a poor communication connection quality. The communication connection quality alarm notification is generated when the controller detects, in a process of transferring a media stream between the fusion device and a remote device, that the quality of a communication connection for a media stream transmission is poor.

The media switching control module 52 is configured to acquire target media description information according to the communication connection quality alarm notification received by the reception module 51, and send a media switching request including the target media description information to the controller to initiate an establishment of a target media plane with the remote device for a media stream interaction. The specific process may refer to the foregoing embodiments of the present invention, which will not be repeated here.

It should be understood that the above functions of the reception module 51 and the media switching control module 52 in this embodiment may be implemented by a processor in the terminal.

In order to solve the above problems, this embodiment further provides a terminal. As shown in FIG. 6, the terminal includes a second processor 61, a second memory 62 and a second communication bus 63. The second communication bus 63 is configured to implement a connection communication between the second processor 61 and the second memory 62. The second processor 61 is configured to execute one or more second programs stored in the second memory 62 to implement the steps of the media control method for the fusion device as shown in embodiment one.

This embodiment further provides a computer storage medium, the computer-readable storage medium stores one or more first programs, and the one or more first programs are executed by one or more processors to implement the steps of the media control method for the fusion device on the controller side as described in the above embodiments.

Alternatively, the computer-readable storage medium stores one or more second programs, and the one or more second programs are executed by one or more processors to implement the steps of the media control method for the fusion device on the terminal side as described in the above embodiments.

Next, the embodiments of the present invention will be described in conjunction with specific scenarios. In a specific application scenario, the terminal is a UE, the remote device is a remote UE, an SDP structure is adopted for the media description information, an information interaction between the fusion device and the UE may be implemented through a short-range communication, and a session border controller (SBC) is adopted for the controller.

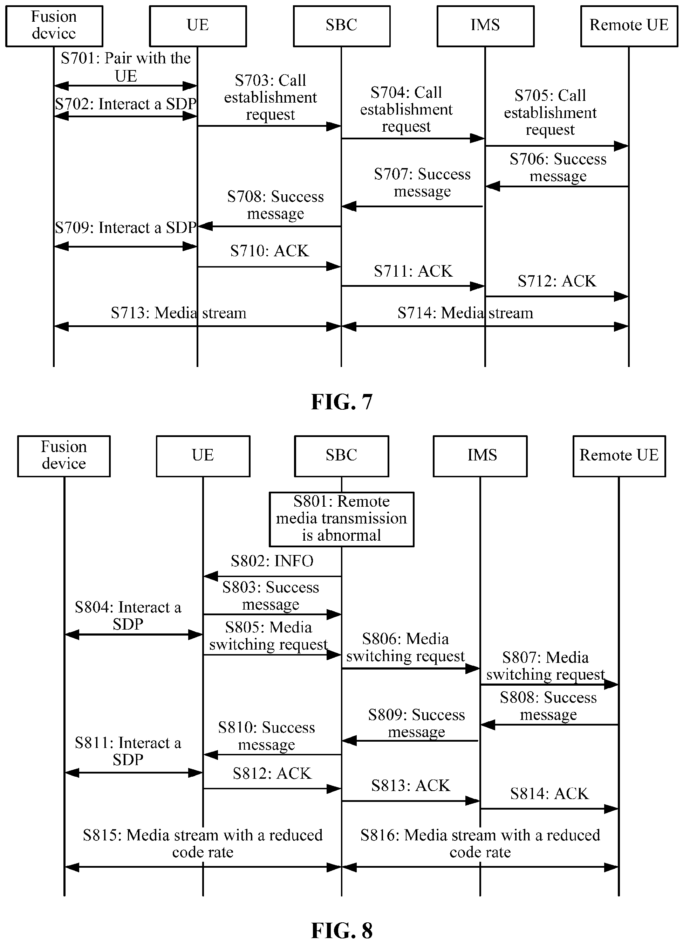

As shown in FIG. 7, in this example, an example process in which the UE establishes a fusion device call with the remote UE includes steps described below.

In S701, the fusion device is paired with the UE.

Here, a specific pairing manner may be flexibly determined according to the adopted short-range communication manner.

In S702, the UE interacts with the fusion device to obtain an SDP of the fusion device.

In this example, the UE may send a media description information query request to the fusion device to acquire the SDP of the fusion device. Alternatively, the fusion device may actively push the SDP to the UE after successfully paired with the UE.

In S703, the UE sends a call establishment request to the SBC.

The UE initiates the call establishment request INVITE by using the SDP of the fusion device and sends the call establishment INVITE to the SBC.

It needs to be special processed that the UE carries a media stream detection instruction including a media detection instruction in the INVITE. The media detection indication may be used for indicating which specific media streams will be detected.

In S704, the SBC forwards the call establishment request to an IMS.

After receiving the INVITE, the SBC determines a media stream to be detected in this communication according to the media detection instruction, and then detects the quality in the subsequent media transmission process; and the SBC continues to forward the INVITE to the IMS after removing the media detection indication from the INVITE.

In S705, the IMS sends the call establishment request to the remote UE.

In S706, the remote UE replies with a success message.

Here, the remote UE replies with 200OK.

In S707, the IMS forwards the success message to the SBC.

In S708, the UE receives the success message.

In S709, the UE uses the SDP to interact with the fusion device.

The UE uses the SDP of the remote UE in the received 200OK to interact with the fusion device.

In S710, the UE replies with an acknowledgement (ACK).

In S711, the SBC forwards the ACK.

In S712, the remote UE receives the ACK and the call is established.

In S713, the fusion device uses the media stream to interact with the SBC.

In S714, the SBC transfers the media stream and uses the media stream to interact with the remote UE.

In one example, when the SBC detects that the remote communication quality is poor, the terminal may perform a media switching by adopting a media stream code rate reduction manner. An implementation process is shown in FIG. 8 and includes steps described below.

In S801, the SBC detects that the remote media transmission is abnormal (the remote communication quality of the media stream to be detected is poor).

In S802, the SBC sends an INFO (that is, a communication connection quality alarm notification) to notify the UE that the remote communication quality is poor.

In S803, the UE replies with a success message.

In an embodiment, the UE replies with 200OK.

In S804, the UE uses the SDP to interact with the fusion device.

Here, the UE uses a reduced code rate to interact with the fusion device to obtain the SDP of the fusion device, and the SDP contains information for characterizing a new media stream code rate.

In S805, the UE sends a media switching request to the SBC.

The UE initiates the media switching request to the remote UE by using the obtained SDP, and sends a Re-INVITE to the SBC. Of course, this may also be achieved by sending a media modification request or a data update request.

In S806, the SBC forwards the media switching request to the IMS.

In S807, the IMS forwards the media switching request to the remote UE.

In S808, the remote UE replies with a success message.

In S809, the IMS forwards the success message.

In S810, the UE receives the success message.

In S811, the UE uses the received SDP to interact with the fusion device.

In S812, the UE replies with an ACK.

In S813, the SBC forwards the ACK.

In S814, the remote UE receives the ACK.

In S815, the fusion device uses the media stream with a reduced code rate to interact with the SBC.

After the media switching is completed, the code rate of the media stream is reduced, and the media stream may continue to be transmitted between the fusion device and the SBC with a better transmission quality.

In S816, the SBC uses the media stream with the reduced code rate to interact with the remote UE.

After the media switching is completed, the code rate of the media stream is reduced, and the media stream may continue to be transmitted between the SBC and the remote UE with a better transmission quality.

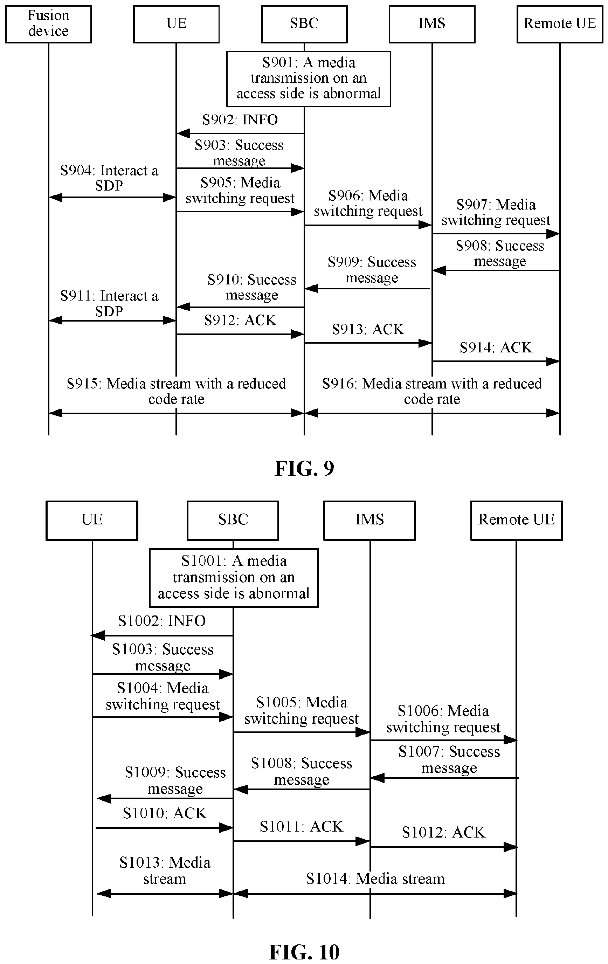

In one example, when the UE detects that a communication quality of an access-side network is poor, the UE may perform the media switching by adopting a media stream code rate reduction manner. An implementation process is shown in FIG. 9 and includes steps described below.

In S901, the SBC detects that a media transmission on the access side is abnormal (the communication quality of the media stream to be detected on the access side is poor).

In S902, the SBC sends an INFO to notify the UE that the communication quality on the access side is poor.

In S903, the UE replies with a success message.

In an embodiment, the success message is 200Ok.

In S904, the UE uses an SDP to interact with the fusion device.

The interaction of the reduced code rate is performed and the SDP of the fusion device is obtained, where the SDP contains information for characterizing a new media stream code rate. In this embodiment, it is possible that the UE does not have the media capability of the fusion device, so that the media stream cannot fall back and the code rate reduction manner is adopted, or the UE may have the media capability of the fusion device, but according to the type of the current media stream and the specific communication quality condition, the code rate reduction manner is adopted.

In S905, the UE sends a media switching request to the SBC.

The UE initiates the media switching request to the remote UE by using the obtained SDP, and sends a Re-INVITE to the SBC. Of course, this may also be achieved by sending a media modification request or a data update request.

In S906, the SBC forwards the media switching request to the IMS.

In S907, the IMS forwards the media switching request to the remote UE.

In S908, the remote UE replies with a success message.

In S909, the IMS forwards the success message.

In S910, the UE receives the success message.

In S911, the UE uses the received SDP to interact with the fusion device.

In S912, the UE replies with an ACK.

In S913, the SBC forwards the ACK.

In S914, the remote UE receives the ACK.

In S915, the fusion device uses the media stream with a reduced code rate to interact with the SBC.

After the media switching is completed, the code rate of the media stream is reduced, and the media stream may continue to be transmitted between the fusion device and the SBC with a better transmission quality.

In S916, the SBC uses the media stream with the reduced code rate to interact with the remote UE.

After the media switching is completed, the code rate of the media stream is reduced, and the media stream may continue to be transmitted between the SBC and the remote UE with a better transmission quality.

In one example, when the UE detects that the communication quality of the access-side network is poor, and when the UE has the media capability of the fusion device, the media switching may be performed by adopting a media stream fallback manner. An implementation process is shown in FIG. 10 and includes steps described below.

In S1001, the SBC detects that the media transmission on the access side is abnormal (the communication quality of the media stream to be detected on the access side is poor).

In S1002, the SBC sends an INFO to notify the UE that the communication quality on the access side is poor.

In S1003, the UE replies with a success message.

In an embodiment, the success message is 2000k.

In S 1004, the UE sends a media switching request to the SBC.

Since the UE has the similar media capability to that of the fusion device, the media stream may fall back, and the UE initiates a media switching request to the remote UE by using the SDP of the UE itself and sends a Re-INVITE to the SBC.

In S1005, the SBC forwards the media switching request to the IMS.

In S1006, the IMS forwards the media switching request to the remote UE.

In S1007, the remote UE replies with a success message.

In S1008, the IMS forwards the success message.

In S1009, the UE receives the success message.

In S1010, the UE replies with an ACK.

In S1011, the SBC forwards the ACK.

In S1012, the remote UE receives the ACK.

In S1013, the UE uses the media stream to interact with the SBC.

After the media switching is completed, the media stream falls back on the UE, and may continue to be transmitted between the UE and the SBC with a better transmission quality. It should be noted here that, when the fusion device does not use the UE to transfer the media stream, the access-side network of the UE is different from the access-side network of the fusion device.

In S1014, the SBC uses the media stream to interact with the remote UE.

The media switching is completed, and the media stream may continue to be transmitted between the SBC and the remote UE with a better transmission quality.

The SBC in this embodiment may detect the transferred media stream, and when the SBC detects that a problem occurs in transmitting the media stream due to the poor network quality, the UE may be notified to initiate a timely media switching according to a specific environment where a network with the problem is located and features of the media stream, so that the multimedia communication may continue, and thus the user satisfaction for the experience is improved.

Apparently, it should be understood by those skilled in the art that the modules or steps of the embodiments of the present invention described above may be implemented by a general-purpose computing apparatus, the modules or steps may be concentrated on a single computing apparatus or distributed on a network composed of multiple computing apparatuses, and optionally, the modules or steps may be implemented by program codes executable by the computing apparatuses, so that the modules or steps may be stored in computer storage media (a read-only memory (ROM)/a random access memory (RAM), a magnetic disk, and an optical disk) and executed by the computing apparatus. In some cases, the illustrated or described steps may be executed in sequences different from those described herein, or the modules or steps may be made into various integrated circuit modules respectively, or multiple modules or steps therein may be made into a single integrated circuit module for implementation. Therefore, the present invention is not limited to any specific combination of hardware and software.

The foregoing is a further detailed description of the embodiments of the present invention in connection with specific implementations, and it can not be considered that the specific implementations of the present invention are limited only to these descriptions. For those of ordinary skill in the art to which the present invention pertains, several simple deductions or substitutions may be made without departing from the concept of the present invention, all of which should be regarded as belonging to the scope of the present invention.

## Claims

1. A media control method for a fusion device, comprising:
in a case where a controller detects, in a process of transferring a media stream between the fusion device and a remote device, that a quality parameter of a communication connection for a media stream transmission is not matched with a preset quality parameter threshold, sending, by the controller, a communication connection quality alarm notification to a terminal; and
receiving, by the controller, a media switching request sent by the terminal according to the communication connection quality alarm notification, and forwarding the media switching request to a registration server to establish a target media plane with the remote device for a media stream interaction;
wherein the media switching request comprises target media description information acquired by the terminal according to the communication connection quality alarm notification.

2. The media control method for the fusion device of claim 1, wherein before transferring, by the controller, the media stream between the fusion device and the remote device, the method further comprises:
receiving a media stream detection instruction sent by the terminal and used for indicating a media stream to be detected; and
detecting, in the process of transferring the media stream between the fusion device and the remote device, the media stream to be detected according to the media stream detection instruction.

3. A media control method for a fusion device, comprising:
receiving, by a terminal, a communication connection quality alarm notification sent by a controller, wherein the communication connection quality alarm notification is generated in a case where the controller detects, in a process of transferring a media stream between the fusion device and a remote device, that a quality parameter of a communication connection for a media stream transmission is not matched with a preset quality parameter threshold;
acquiring, by the terminal, target media description information according to the notification; and
sending, by the terminal, a media switching request comprising the target media description information to the controller to initiate an establishment of a target media plane with the remote device for a media stream interaction.

4. The media control method for the fusion device of claim 3, wherein acquiring, by the terminal, the target media description information according to the notification comprises:
acquiring, by the terminal, first media description information of the fusion device in a case where the communication connection quality alarm notification comprises that the controller detects that a quality parameter of a communication connection for a media stream transmission between the controller and the fusion device is not matched with a preset quality parameter, wherein the first media description information comprises information for characterizing a first new media stream code rate, and the first new media stream code rate is less than a code rate used by a media stream currently transmitted by the fusion device.

5. The media control method for the fusion device of claim 3, wherein acquiring, by the terminal, the target media description information according to the notification comprises:
acquiring, by the terminal, second media description information of the terminal in a case where the communication connection quality alarm notification comprises that the controller detects that a quality parameter of a communication connection for a media stream transmission between the controller and the fusion device is not matched with a preset quality parameter and in a case where the terminal determines that a media capability of the terminal supports a media stream fallback on the fusion device.

6. The media control method for the fusion device of any one of claims 3 to 5, wherein acquiring, by the terminal, the target media description information according to the notification comprises:
acquiring, by the terminal, third media description information of the fusion device in a case where the communication connection quality alarm notification comprises that the controller detects that a quality parameter of a communication connection for a media stream transmission between the controller and the remote device is not matched with the preset quality parameter threshold, wherein the third media description information comprises information for characterizing a second new media stream code rate, and the second new media stream code rate is less than a code rate used by a media stream currently transmitted by the fusion device.

7. A media control apparatus for a fusion device, comprising:
a monitoring module, configured to send a communication connection quality alarm notification to a terminal in a case of detecting, in a process of a media stream between the fusion device and a remote device, that a quality parameter of a communication connection for a media stream transmission is not matched with a preset quality parameter threshold; and
a processing module, configured to receive a media switching request sent by the terminal according to the communication connection quality alarm notification, and forward the media switching request to a registration server to establish a target media plane with the remote device for a media stream interaction, wherein the media switching request comprises target media description information acquired by the terminal according to the notification.

8. A media control apparatus for a fusion device, comprising:
a reception module, configured to receive a communication connection quality alarm notification sent by a controller, wherein the communication connection quality alarm notification is generated in a case where the controller detects, in a process of transferring a media stream between the fusion device and a remote device, that a quality parameter of a communication connection for a media stream transmission is not matched with a preset quality parameter threshold; and
a media switching control module, configured to acquire target media description information according to the notification, and send a media switching request comprising the target media description information to the controller to initiate an establishment of a target media plane with the remote device for a media stream interaction.

9. A controller, comprising a first processor, a first memory and a first communication bus, wherein the first communication bus is configured to implement a connection communication between the first processor and the first memory, and the first processor is configured to execute one or more first programs stored in the first memory to implement steps of the media control method for the fusion device of claim 1 or 2.

10. A terminal, comprising a second processor, a second memory and a second communication bus, wherein the second communication bus is configured to implement a connection communication between the second processor and the second memory, and the second processor is configured to execute one or more second programs stored in the second memory to implement steps of the media control method for the fusion device of any one of claims 3 to 6.

11. A storage medium, comprising a stored program which, when executed, performs the media control method for the fusion device of claim 1 or 2.

12. A storage medium, comprising a stored program which, when executed, performs the media control method for the fusion device of any one of claims 3 to 6.
